# FASCICULE DE BREVET EUROPEEN

(11) **EP 0 390 635 B1**
(45) Date de publication et mention de la délivrance du brevet: **09.06.1993**
(21) Numéro de dépôt: 90400707.7
(22) Date de dépôt: 16.03.1990
(51) Int. Cl.: B23K 37/04, B62D 65/00

(54) **Dispositif d'assemblage carrosserie à outillages lateraux interlocalisables**
Vorrichtung zum Zusammenbauen einer Karosserie mittels positionierbaren Seitenwerkzeugen
Device for assembling a vehicle body by positionable lateral tools

(30) Priorité: 28.03.1989 FR 8903979
(43) Date de publication de la demande: 03.10.1990
(73) Titulaire: RENAULT AUTOMATION, 92109 Boulogne-Billancourt (FR)
(72) Inventeur: Negre, Bernard, F-75020 Paris (FR); de Filippis, Christian, F-77166 Evry (FR)
(74) Mandataire: Saint Martin, René

(56) Documents cités:
- FR-A- 2 619 523
- US-A- 4 670 961

## Description

La présente invention se rapporte aux lignes capacitaires de carrosseries, par exemple de véhicules automobiles. Elle vise un dispositif pour la mise en place des outillages d'une machine d'assemblage de carrosseries, dérivée de celle décrite dans la demande de brevet FR 88/01855 au nom de la demanderesse.

Elle a pour but de proposer une solution alternative, architecturée autour d'outillages latéraux.

L'état de la technique ne relève et ne suggère aucun système semblable.

A cet effet, l'invention reprend le principe de l'interlocalisation et de verrouillage des outillages d'une machine d'assemblage de carrosserie, ainsi que décrit et revendiqué dans le brevet initial, mais en l'appliquant non plus à des outillages à mise en place dans le plan longitudinal médian, mais dans le plan transversal. Elle porte donc sur l'application de ce principe à ce nouveau découpage d'outillage, ainsi que sur les éléments de manutention de ces outillages y afférent. Elle se démarque de la précédente par le fait que la nouvelle structure d'outillage ainsi obtenue, n'est plus strictement annulaire mais pyramidale.

Outre les avantages cités dans la demande initiale :
- gain de masse sur la structure machine (pas de surdimentionnement des éléments pour diminuer la flèche),
- gain de rigidité de l'anneau géométrique,
- répétabilité accrue dans le temps,
- autonomie géométrique de l'outillage permettant d'exécuter hors ligne :
   . le contrôle des références,
   . la mise au point des outillages, et la production des petites séries (préséries),
   . la programmation et l'optimisation des trajectoires robot
- gain de temps en réalisation (travail en temps masqué) et en reconversion ligne (diminution du temps d'arrêt).
- préservation de la confidentialité entourant tout nouveau produit automobile, par la possibilité ainsi offerte d'étudier et de réaliser les outillages spécifiques au modèle, séparément du capacitaire machine,
- positionnement du tri d'outils interverrouillés dans le capacitaire machine exécutable dans la seule tolérance de localisation des points de soudure,

cette invention permet une triangulation plus importante des outillages interlocalisés.

Elle se démarque typiquement des systèmes de conformation à cadres latéraux existants (ou gates) par :
. son système original de mise en place des outillages,
. l'indépendance de la structure machine de la fonction de localisation des différents outillages entre-eux,
. son aptitude à prendre facilement en compte un certain nombre de références axiales.

D'autres particularités et avantages de l'intention, ressortiront plus clairement de la description qui suit, d'un mode de réalisation préféré, donné à titre d'exemple, en référence aux dessins annexés dans lesquels :
- La figure 1 représente une vue longitudinale de ce dispositif sans magasin d'outillages permettant de distribuer 4 outillages supérieurs (pour au moins 2 véhicules différents), ainsi que le système de changement de platine inférieure.
- La figure 2 représente une vue transversale de la machine (sans magasin d'outillages additionnel) permettant de distribuer 4 outillages supérieurs (pour au moins 2 véhicules différents), ainsi que le système de changement de platine inférieure.
- La figure 3 représente une vue longitudinale du distributeur central équipé d'une première option de 2 magasins transversaux (1 à l'avant et 1 à l'arrière de la machine) permettant de stocker un total de 6 outillages pour la fabrication d'au moins 3 véhicules différents.
- La figure 4 représente une vue longitudinale du distributeur central équipé d'une deuxième option de 2 magasins rotatifs (1 à l'avant et 1 à l'arrière de la machine) permettant de stocker un total de 10 outillages pour la fabrication d'au moins 5 véhicules différents.

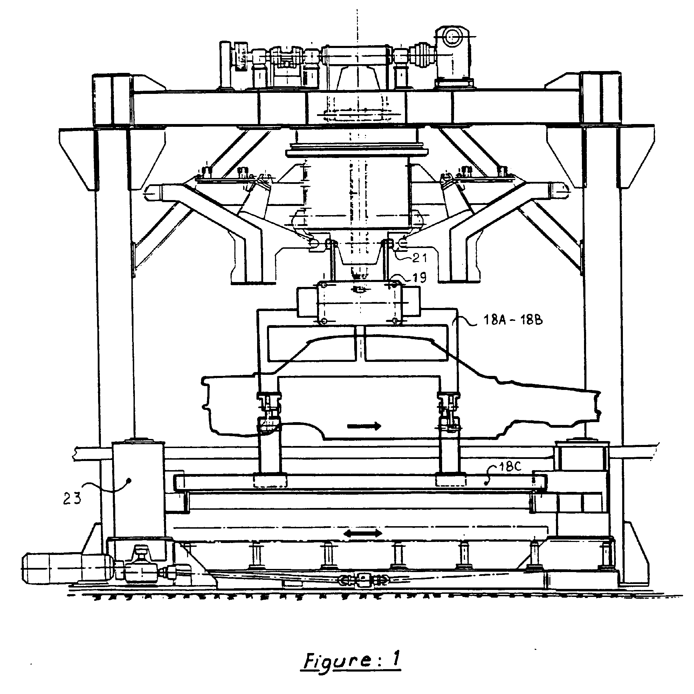

La machine d'assemblage de carrosserie illustrée sur les figures 1 à 4 est architecturée autour de trois types d'outillages différents :
. un outillage inférieur à 2 positions, dont une de travail (pièce prise) bien définie,
. deux outillages supérieurs latéraux désolidarisables de la structure de la machine en position de travail (pièce prise).

Chaque type d'outillage est, en outre, servi par un dispositif de changement d'outils qui permet de configurer le poste de mise en géométrie en fonction du véhicule en place.

Cette machine est constituée de la manière suivante :

Une structure centrale 01 supportant tous les mécanismes de manutention et de distribution des outillages supérieurs.

### *Fonction manutention (mise en place des trois outillages) :

### Pour la partie supérieure :

Un ensemble de bielles 10 et 12 assure la montée et la descente de chaque outillage (position "magasinage" et position "travail"). Cet ensemble de bielles est actionné par la motorisation 07 et le réducteur 09. L'équilibrage statique de l'outillage est assuré par 11.

L'articulation de l'outillage est maintenu de manière flottante dans 21 par l'intermédiaire de 06.

### Pour la partie inférieure :

Un ensemble de quatre colonnes 23 assure la fonction de monte et baisse de la platine inférieure 18C. Son positionnement dans l'espace est assuré par 28.

### *Fonction stockage magasin :

### Pour la partie supérieure :

### OPTION 1 :

Un distributeur rotatif central 02 équipé d'une couronne 03 capable de stocker (distribuer) 4 outillages et d'un système de verrouillage d'outil 13 actionné par 14.

### OPTION 2 (suppose OPTION 1 prise) :

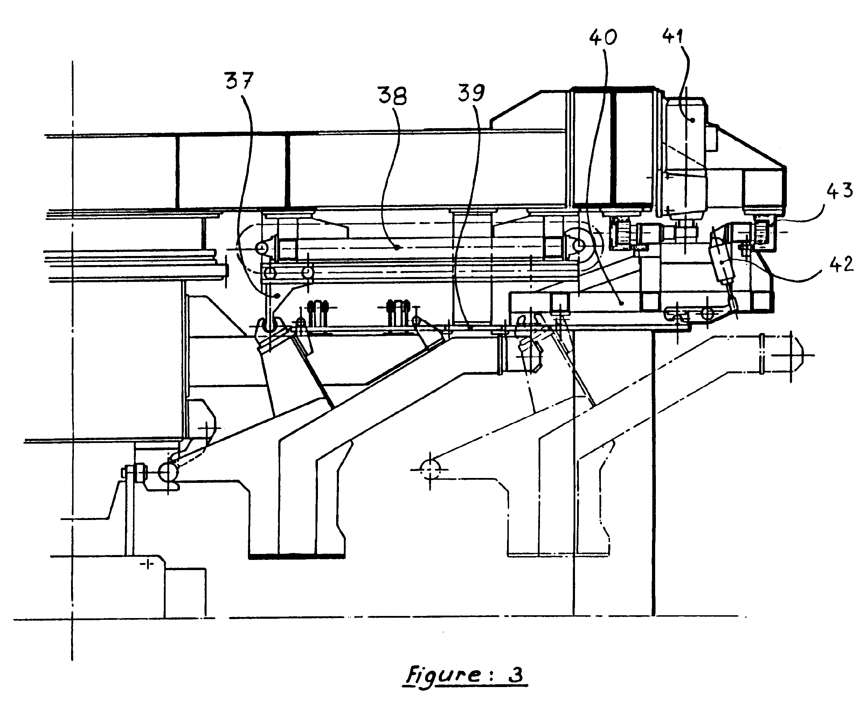

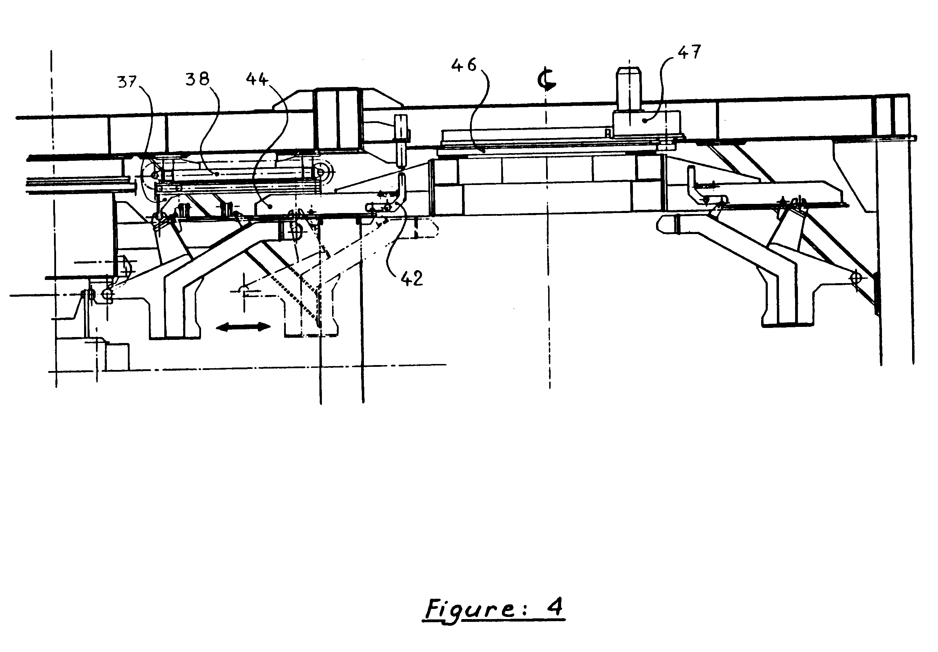

- soit un magasin avant et un magasin arrière 40, de type translateur (à trois emplacements) permettant de stocker un outillage (par magasin) et d'assurer l'évacuation ou le chargement d'outillages du distributeur central 02 par l'intermédiaire du mécanisme de translation 38 de la crosse 37, l'ensemble roulant sur les rails fixes 39. Le verrouillage de l'outillage dans ce magasin est assuré par 42 (figure 3) et la translation transversale dans les rails 43 est assurée par le système de motorisation 41 ;
- soit un magasin avant et un magasin arrière 44, de type rotatif (à quatre emplacements) permettant de stocker trois outillages (par magasin) et d'assurer l'évacuation ou le changement d'outillages du distributeur central 02 par l'intermédiaire du mécanisme de translation 38 et de la crosse 37. Le verrouillage de l'outillage dans ce magasin est assuré par 42 (figure 4). La rotation du magasin autour de la couronne 46 est assurée par la motorisation 47.

### Pour la partie inférieure :

Dans son mouvement descente, l'élévateur inférieur 23 dépose la platine inférieure 18C sur le système à galets 29 et le mécanisme de translation 31 (optionnel) permet d'évacuer longitudinalement 18C et d'approvisionner en même temps une autre platine d'outillage intérieur.

### *Fonction géométrie véhicule :

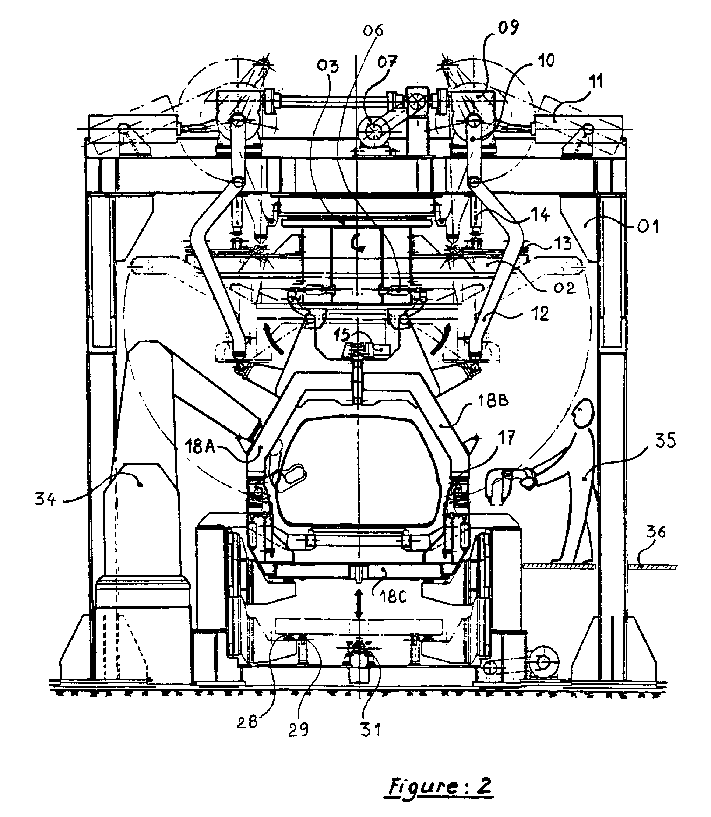

Une fois le trio d'outillages sélectionné, l'opération de mise en géométrie parfaite d'une carrosserie "A" est réalisée de ces trois outillages :
- les deux outillages latéraux 18A et 18B pivotent autour de l'axe de rotation défini par 21 et sont verrouillés entre-eux par 19 et 15 (le verrouillage représenté sur les figures 1 et 2 est de type "encastrement" mais peut également être de type "rotoide").
- l'outil inférieur 18C sera alors positionné avec la précision requise par la seule tolérance d'exécution des points de soudage robotisés, tout en accostant l'ensemble forme par 18A et 18B permettant :
   . un auto-centrage très précis de l'ensemble 18A et 18B sur 18C,
   . un verrouillage de 18A et 18B avec 18C par l'intermédiaire de 17,
   . une désolidarisation de l'ensemble 18A et 18B de 21 et par conséquent, de toute la structure machine 01.
- après interverrouillage de l'ensemble 18A et 18B avec 18C, ces trois outils forment une structure pyramidale rigide indépendante de la structure extérieure 01, enserrant au plus près la carrosserie "A" dans son plan transversal.

### *Fonction épinglage des pièces :

Elle peut être assurée de différentes manières :
- Robots 34
- Opérateurs 35 sur platelage 26
- Pinces de soudure spécifique (ou autres moyens de liaison) dans l'outillage.

## Revendications

1. Dispositif d'interlocalisation et de verrouillage des outillages (18A,18B,18C) d'une machine (01) d'assemblage de carrosserie, caractérisé en ce que cette machine d'assemblage est architecturée autour de deux outillages latéraux (18A,18B) venant s'interlocaliser et se verrouiller entre eux-mêmes et un outillage inférieur (18C), formant ainsi une structure triangulée et pyramidale indépendante géométriquement de la structure machine (01).

2. Dispositif suivant la revendication 1, caractérisé par un distributeur rotatif central (02) équipé d'une couronne (03) capable de stocker et distribuer plusieurs outillages (18A,18B), et d'un système de verrouillage d'outils (3) commandé par un actionneur (14).

3. Dispositif suivant les revendications 1 et 2, caractérisé en ce que l'accostage des outillages latéraux (18A,18B) s'opère par un mouvement de rotation d'axe parallèle au sens transfert des pièces.

## Patentansprüche

1. Vorrichtung zum Positionieren und zum Verriegeln von Werkzeugen (18A, 18B, 18C) in einer Maschine (01) zum Zusammenbauen einer Karosserie, dadurch gekennzeichnet, daß diese Maschine zum Zusammenbauen um zwei Seitenwerkzeuge (18A, 18B) herum errichtet ist, die ineinander greifen und miteinander verriegelbar sind und um ein unteres Werkzeug (18C) herum, so daß ein dreieckiger pyramidenförmiger Aufbau gebildet ist, der geometrisch vom Aufbau der Maschine (01) unabhängig ist.

2. Vorrichtung nach Anspruch 1, dadurch gekennzeichnet, daß ein zentraler drehbarer Verteiler (02) mit einem Kranz (03) versehen ist, welcher in der Lage ist, mehrere Werkzeuge (18A, 18B) zu lagern und zu verteilen und mit einem Werkzeugverriegelungssystem (3) versehen ist, welches durch einen Betätiger (14) steuerbar ist.

3. Vorrichtung nach Ansprüchen 1 und 2, dadurch gekennzeichnet, daß die Kopplung der Seitenwerkzeuge (18A, 18B) erfolgt durch eine Drehbewegung, deren Achse parallel zur Vorschubrichtung der Teile ist.

## Claims

1. A device for the inter-location and locking of tools (18A, 18B, 18C) of a bodywork assembly machine (01), characterized in that this assembly machine is structured around two lateral tools (18A, 18B) which are inter-located and locked with respect to one another and a lower tool (18C), thus forming a triangulated and pyramidal structure which is geometrically independent from the machine structure (01).

2. A device as claimed in claim 1, characterized by a central rotary distributor (02) fitted with a crown (03) able to store and distribute a plurality of tools (18A, 18B) and a tool locking system (3) controlled by an actuator (14).

3. A device as claimed in claims 1 and 2, characterized in that the approach of the lateral tools (18A, 18B) takes place by means of a rotary movement whose axis is parallel to the direction of transfer of the components.
